Europäisches Patentamt

European Patent Office

Office européen des brevets

(11) Veröffentlichungsnummer: **0 049 401**
B1

(12) **EUROPÄISCHE PATENTSCHRIFT**

(45) Veröffentlichungstag der Patentschrift:
23.01.85

(51) Int. Cl.⁴: **G 21 C 17/00**, G 01 M 3/24, G 01 N 29/00, G 01 H 1/00

(21) Anmeldenummer: 81107372.5

(22) Anmeldetag: 17.09.81

(54) Verfahren zur Schallemissionsprüfung von aus Stahl bestehenden Behältern oder Rohrleitungen, insbesondere für Kernreaktoranlagen.

(30) Priorität: 30.09.80 DE 3036951

(43) Veröffentlichungstag der Anmeldung:
14.04.82 Patentblatt 82/15

(45) Bekanntmachung des Hinweises auf die Patenterteilung:
23.01.85 Patentblatt 85/4

(84) Benannte Vertragsstaaten:
DE FR GB

(56) Entgegenhaltungen:
DE - A - 2 317 793
DE - A - 2 747 309
DE - A - 2 828 391
DE - A - 2 848 702
DE - A - 2 937 709

ATOMWIRTSCHAFT, April 1975 R. ETTEMEYER et al. "Schallemissionsanalyse am Primärsystem des Kernkraftwerks Grundremmingen" Seiten 182 bis 185
TECHNISCHES MESSEN, Band 47, Nr. 11, November 1980, München J. KOLERUS "Schallemissionsanalyse, Teil 1" Seiten 389 bis 394
TECHNISCHES MESSEN, Band 47, Nr. 11, Dezember 1980, München J. KOLERUS "Schallemissionsanalyse, Teil 2" Seiten 427 bis 434

(73) Patentinhaber: KRAFTWERK UNION AKTIENGESELLSCHAFT, Wiesenstrasse 35, D-4330 Mülheim (Ruhr) (DE)

(72) Erfinder: Votava, Erwin, Dr., Im Langzeil 5, D-8530 Pforzheim (DE)
Erfinder: Stipsits, Günter, Poxdorfer Strasse 10, D-8524 Neunkirchen (DE)
Erfinder: Sommer, Richard, Hertleinstrasse 2, D-8600 Bamberg (DE)

(74) Vertreter: Mehl, Ernst, Dipl.-Ing. et al, Postfach 22 01 76, D-8000 München 22 (DE)

## Beschreibung

Die Erfindung bezieht sich auf ein Verfahren zur Schallemissionsprüfung (SEP) von aus Stahl bestehenden Behältern oder Rohrleitungen, insbesondere zur Prüfung von Primärkreiskomponenten von Kernreaktoranlagen, gemäß Oberbegriff des Anspruchs 1.

Ein solches Verfahren ist z. B. durch den Aufsatz »Fehlerortung und Leckageprüfung an Großkesseln und Rohrleitungen mit Hilfe der Schallemissionsanalyse« von J. Eisenblätter und P. Jax (VGB Kraftwerkstechnik, 56, Juli 1976, Heft 7, Seiten 452 bis 456) bekannt. Die Schallemissionsprüfung, auch als Schallemissionsanalyse bezeichnet, beruht danach auf der Erscheinung, daß bei Verformungsvorgängen oder Rißwachstum in einem Material kurze Schallimpulse entstehen, deren Frequenzbereich bis weit in das Ultraschallgebiet reicht. Mit empfindlichen piezoelektrischen Meßsonden als Schallaufnehmer, auch elektromagnetisch arbeitende Schallaufnehmer sind grundsätzlich möglich, kann man die emittierten Schall-, insbesondere Ultraschallimpulse, aufnehmen. Verwendet man dabei mehrere, d. h. mindestens drei über die zu prüfende Komponente verteilte Meßsonden, so kann man mit Hilfe des sogenannten Triangulationsverfahren ähnlich wie bei der Lokalisierung des Herds eines Erdbebens in der Seismologie eine Fehlerortung vornehmen. Nach elektronischer Messung der Laufzeitunterschiede zwischen den einzelnen Meßsonden läßt sich der Ort des Fehlers als Schallquelle berechnen. Bei Rohrleitungen genügt im allgemeinen eine lineare Ortung des Fehlers durch Messung der Laufzeitdifferenz zwischen zwei Meßsonden.

Der zweckmäßige Aufbau einer einzelnen Meßsonde und einer zugehörigen elektronischen Schaltung mit den Meßsonden nachgeschalteten Verstärkern und einer Bildröhre ist z. B. der US-A-4 088 907 zu entnehmen.

Bisherige Prüfpraxis war es, bei den Wasserdruckproben sowohl für dick- als auch dünnwandige Behälter die gleichen auf ein bestimmtes Frequenzband abgestimmten SEP-Meßsonden, meistens resonante Sonden zwischen 100 kHz bis 300 kHz, zu verwenden. Es wurde nun gefunden, daß das Wasser — notwendiges Druckmedium bei einer Wasserdruckprobe — einen großen Einfluß auf die Fehlersignalausbreitung hat, insbesondere je dünnwandiger der zu prüfende Behälter bzw. eine entsprechende Rohrleitung ist. Aus den aufgenommenen Fehlersignalen lassen sich nämlich dann keine eindeutigen Ortsangaben der Fehler machen, da infolge der Ausbildung einer langen Anstiegsflanke keine eindeutige Wellenausbreitungsgeschwindigkeit angegeben werden kann.

Der Erfindung liegt die Aufgabe zugrunde, ein Verfahren der eingangs definierten Art anzugeben, mit dem sowohl bei dick- als auch bei dünnwandigen Behältern und Rohrleitungen sich — bei Vorhandensein von Schallemissionsquellen — eindeutige Fehlersignale ableiten lassen. Erfindungsgemäß wird die gestellte Aufgabe durch die im Kennzeichen des Anspruchs 1 angegebenen Maßnahmen gelöst. Mit anderen Worten: Es gibt für Stahl eine wandstärkenabhängige Grenzfrequenz $f_G$, oberhalb welcher die Abstrahlung in ein flüssiges Medium, z. B. Wasser, zurückgeht, wobei die in Anspruch 1 angegebene Formel in der für Plattenwellendiagramme auch gebräuchlichen Schreibweise wie folgt geschrieben werden kann:

$$5,9 \leq f_G \times d \leq 6,0 \ [mm \cdot MHz]$$

Die physikalische Erklärung für die angegebene Gleichung bzw. die dadurch definierte wandstärkenabhängige Grenzfrequenz $f_G$ ist im wesentlichen darin zu sehen, daß unterhalb der Grenzfrequenz liegende Frequenzbänder von der Schallemissionsquelle in das flüssige Druckmedium, also insbesondere Wasser, abgestrahlt werden, dagegen oberhalb der Grenzfrequenz liegende Frequenzbänder ihren Weg als Plattenwellen durch das Material der zu prüfenden Bauteile hindurch direkt oder nach ein oder mehreren Grenzflächenreflexionen zu den Meßsonden nehmen. Bei Anwendung des angegebenen Bemessungspegel nehmen deshalb die Meßsonden nur die im Rohr oder in der Komponente laufenden Plattenwellen wahr. Dies führt zu einer scharfen Anstiegsflanke des Meßsignals, dem damit eine eindeutige Wellenausbreitungsgeschwindigkeit zuzuordnen ist. Daraus resultiert eine Ortungsgenauigkeit, wie sie im leeren Rohr oder in einer leeren Komponente an sich erreicht werden kann. Dagegen führt eine Vermischung der Plattenwellen mit den sogenannten Wasserwellen (sich im Wasser fortpflanzenden Ultraschallimpulsen) zu einer vom Abstand des SEP-Signals zur Sonde abhängigen Geschwindigkeit bei Schwellwertüberschreitung und damit zu so großen Ortungsungenauigkeiten, daß die Anwendung der SEP für dünnwandige Behälter und Rohrleitungen unmöglich wird.

In spezieller Ausgestaltung der Erfindung können breitbandige Meßsonden zusammen mit nachgeschalteten an der Grenzfrequenz $f_G$ hochpaßgefilterten Vorverstärkern verwendet werden. Zusätzlich oder alternativ dazu ist es auch möglich, die Meßsonden selbst oberhalb der Grenzfrequenz $f_G$ resonant auszubilden, dagegen unterhalb von $f_G$ nicht bzw. beschränkt resonant.

Im folgenden wird anhand der Zeichnung das Verfahren nach der Erfindung noch näher erläutert. Darin zeigt

Fig. 1 in schematischer, nicht maßstabgerechter Darstellung den Ausschnitt aus einer Rohrwandung mit zwei in verschiedenem Abstand von einer Schallemissionsquelle auf die äußere Rohrwandung aufgesetzten Meßsonden,

Fig. 2 ein Diagramm, in dem im doppelt-logarithmischen Maßstab auf der Ordinatenachse die Frequenz $f_G$ in MHz und auf der Abszissenachse die Wandstärke d in Millimeter aufgetragen sind. Dabei ergibt sich für den insbesondere praktisch interessierenden Frequenzbereich zwischen 10 kHz und 1 MHz ein geradliniger Verlauf für die Grenzfrequenz $f_G = f(d)$.

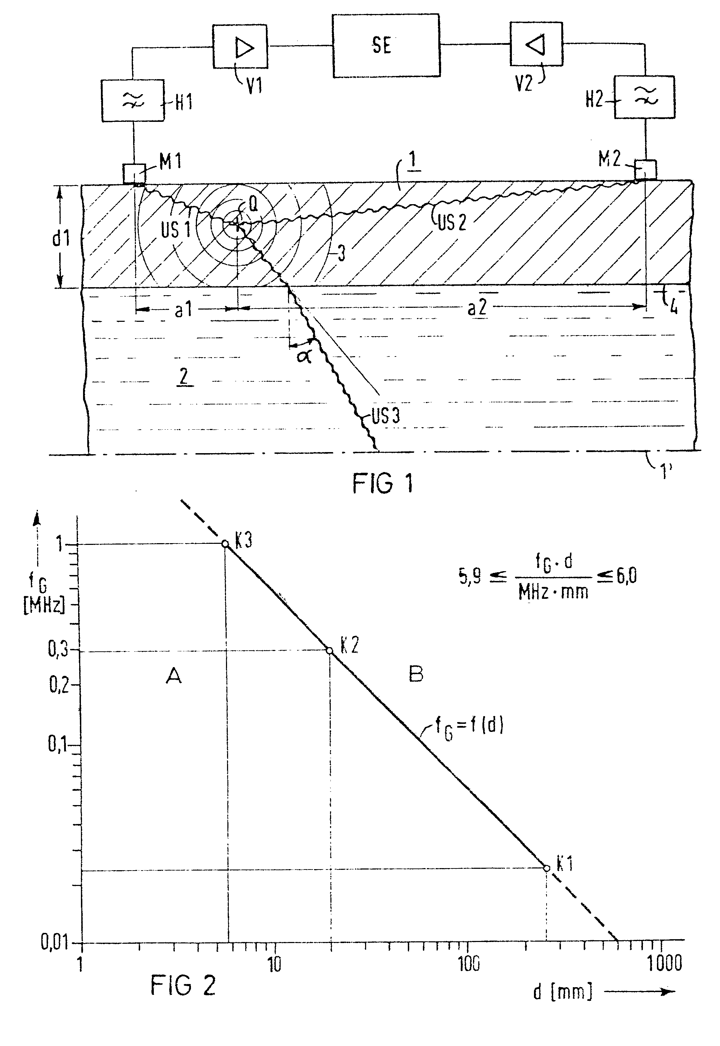

Die Rohrleitung 1 nach Fig. 1 mit Rohrleitungsachse 1' hat eine übertrieben groß dargestellte Wandstärke d1. In ihr befindet sich das unter Prüfdruck stehende Druckmedium 2, im vorliegenden Falle Wasser. Aufgrund der Innendruckbeaufschlagung wird auf die Rohrleitung 1 eine Zugbeanspruchung ausgeübt, die z. B. an der Stelle Q einen materialinternen Verformungsvorgang oder Riß hervorruft, der, wie es die angedeuteten Wellenkreise 3 verdeutlichen, die Aussendung eines Schallemissionssignals verursacht. Von der Emissionsquelle Q gehen Ultraschallwellen US aus, die auf die beiden Meßsonden M1 und M2 auftreffen. Die Meßsonde M1 ist im Axialabstand a1 und die Meßsonde M2 im Axialabstand a2 von der Schallquelle Q entfernt außen auf den Rohrumfang aufgesetzt und dort befestigt. Die lineare Ortung der Quelle Q erfolgt über den Meßsonden M1, M2 jeweils nachgeschaltete Hochpässe H1, H2, die Vorverstärker V1, V2 und der den genannten elektronischen Elementen nachgeschalteten gemeinsamen elektronischen Ortungs- und Bewertungseinrichtung SE. Zum Verständnis der Erfindung genügt die erwähnte Darstellung; der Detailschaltplan ist der Einfachheit halber weggelassen; er kann jedoch z. B. aus der US-A-4 088 907, insbesondere Fig. 9, entnommen werden. Bevorzugt sind die Meßsonden M1, M2 piezoelektrische Wandler. Die zur Meßsonde M1 laufenden US-Wellen sind mit US1, die zur Meßsonde M2 laufenden mit US2 und die in das flüssige Druckmedium 2 abgestrahlten US-Wellen sind mit US3 bezeichnet. Der Strahl US3 wird beim Übergang vom Rohr 1 in das Medium 2 (Grenzfläche 4) zum Lot hin gebrochen, der nicht maßstabgerechte Brechungswinkel $\alpha$ ist zur Illustration eingetragen. Zur möglichst exakten Erfassung des Laufzeitunterschiedes $\Delta t$ zwischen US1 und US2 wird erfindungsgemäß so vorgegangen, daß man sich auf die Messung der Material- oder Plattenwellen US1 und US2 beschränkt, so daß die Störeffekte durch die abgestrahlten Wasserwellen US3 ausgeschaltet werden.

Fig. 2 zeigt den »erlaubten« Frequenz-/Wandstärkenflächenbereich B, welcher durch die Kurve $f_G = f(d)$ vom Flächenbereich A abgetrennt ist, in welchem bei der Schallemissionsprüfung von Stahlbauteilen eine weitgehende Abstrahlung der Schallemissionswellen in das Wasser erfolgt. In Fig. 2 ist die auf MHz und mm zugeschnittene Größengleichung

$$5,9 \leq \frac{f_G \cdot d}{MHz \cdot mm} \leq 6,0$$

eingetragen. Diese Gleichung ist naturgemäß eine Näherungsgleichung, die zum praktischen Arbeiten bestimmt ist; in Nähe der Grenzkurve $f_G$ gibt es fließende Übergänge. Wesentlich ist aber, daß man nun diejenigen Arbeitsbereiche für die Meßsonden und zugehörigen elektronischen Verstärker auswählen kann, in denen zuverlässige Meßergebnisse erhalten werden können. So ergibt sich, siehe Kurvenpunkt K1, für einen Reaktordruckbehälter mit der Wandstärke 250 mm die untere Grenzfrequenz $f_G$ von ca. 0,023 MHz, d. h., demgegenüber niederfrequentere Schallemissionssignale werden vorzugsweise in das Wasser abgestrahlt und stehen für den Meßvorgang nicht mehr zur Verfügung, weshalb man also Meßsonden und/oder zugehörige bandpaßgefilterte elektronische Verstärker verwenden muß, die auf den Empfang des oberhalb dieser Grenzfrequenz liegenden Frequenzbandes des Schallemissionsspektrums abgestimmt sind, dagegen für Frequenzbänder kleiner als $f_G$ beschränkt oder nicht resonant sind. Ein anderes Beispiel gibt der Kurvenpunkt K2: Dabei handelt es sich um eine Rohrleitung mit der Wandstärke 20 mm, und die zugehörige Grenzfrequenz $f_G$ ist ca. 0,295 MHz. Will man eine Rohrleitung mit einer solchen Wandstärke einer Schallemissionsprüfung unterziehen, so gilt für die Abstimmung der Meßsonden und/oder der zugehörigen elektronischen Verstärker sinngemäß das vorstehend Gesagte. Der Kurvenpunkt K3 liegt genau in einem Koordinatenpunkt mit der Grenzfrequenz 1 MHz und der zugehörigen Wandstärke ca. 5,9 mm. Der darüberliegende Bereich der Kurve $f_G$, ebenso wie der unterhalb K1 liegende Bereich, ist — da für praktische Schallemissionsmessungen des Maschinenbaus, insbesondere der Kernreaktortechnik, von geringerer Bedeutung — lediglich gestrichelt dargestellt, zumal bei kleinerwerdenden Wandstärken durch eine Mischung von Effekten, z. B. Dämpfung, nicht mehr diese klare Grenzlinie zwischen den Bereichen A und B gezogen werden kann. Für die praktische Durchführung des Verfahrens empfiehlt es sich nun, breitbandige Meßsonden zusammen mit nachgeschalteten an der Grenzfrequenz $f_G$ hochpaßgefilterten Vorverstärkern oder Verstärkern zu verwenden, wobei diese Verstärker unschwer auf die jeweils in Frage kommenden Frequenzbänder einstellbar ausgeführt werden können. Will man den Hochpaßeffekt noch verstärken, so kann man die Meßsonden selbst oberhalb der jeweils in Frage kommenden Grenzfrequenz $f_G$ resonant ausführen, wobei diese Meßsonden unterhalb von $f_G$ beschränkt oder nicht resonant sind. Das Diagramm nach Fig. 2 gilt für gängigen Maschinenbaustahl, insbesondere ferritischen Stahl.

Das Verfahren nach der Erfindung ist auch anwendbar für Behälter und Rohre, die durch Wasser von außen belastet werden, z. B. Unterseeboote oder Schwimmfüße von Arbeitsplattformen zur Förderung von Öl. In diesem Fall werden die Meßsonden innen gesetzt und ermöglichen bei Einstellung der richtigen Frequenz oberhalb $f_G$ eine kontinuierliche Überwachung auf Risse (und Leckagen), vorausgesetzt, die Betriebsgeräusche sind gering.

Wie bereits erwähnt, wird die SEP auch eingesetzt zur Auffindung und Ortung von Leckagen.

In diesem Fall hat man es mit einem kontinuierlichen Schallemissions-Signal zu tun. Durch Wahl der Sondenfrequenz und Hochpaßfilter oberhalb $f_G$ gelingt es aber auch hier, die Leckage besser zu quantifizieren und die Ortung zu verbessern, da die Vermischung mit den Wasserwellen tunlichst vermieden wird.

## Patentansprüche

1. Verfahren zur Schallemissionsprüfung (SEP) von aus Stahl bestehenden Behältern oder Rohrleitungen, insbesondere zur Prüfung von Primärkreiskomponenten von Kernreaktoranlagen, bei dem der Behälter oder die Rohrleitung bei der Prüfung auf der einen Seite durch ein Druckmedium, insbesondere Wasser, beaufschlagt wird und auf der anderen Seite die bei Verformungsvorgängen, bei Rißwachstum oder bei Leckagen emittierten, sich durch Komponente oder Rohrleitung fortpflanzenden Ultraschallimpulse mittels Meßsonden, insbesondere piezoelektrischer Wandler, aufgenommen werden, die so angeordnet sind, daß aufgrund der Laufzeitunterschiede die jeweilige Schallemissionsquelle ermittelbar ist, wobei die von den Meßsonden aufgenommenen Fehlersignale elektronisch verstärkt und anschließend Aufzeichnungsgeräten zugeleitet werden, dadurch gekennzeichnet, daß Meßsonden und/oder zugehörige elektronische Verstärker verwendet werden, die auf den Empfang des oberhalb einer Grenzfrequenz $f_G$ liegenden Frequenzbandes des Schallemissionsspektrums abgestimmt, dagegen für Frequenzbänder $< f_G$ beschränkt oder nicht resonant sind, wobei die Grenzfrequenz $f_G$ durch die Beziehung

$$5,9 \leq \frac{f_G \cdot d}{MHz \cdot mm} \leq 6,0$$

definiert ist und d die Wandstärke der zu prüfenden Komponente oder Rohrleitung bedeutet.

2. Verfahren nach Anspruch 1, dadurch gekennzeichnet, daß breitbandige Meßsonden zusammen mit nachgeschalteten an der Grenzfrequenz $f_G$ hochpaßgefilterten Vorverstärkern verwendet werden.

3. Verfahren nach Anspruch 1 oder 2, dadurch gekennzeichnet, daß die Meßsonden selbst oberhalb der Grenzfrequenz $f_G$ resonant, dagegen unterhalb von $f_G$ beschränkt oder nicht resonant sind.

## Claims

1. A method for the sound emission examination (SEP) of containers or conduits made of steel, in particular for the examination of primary circuit components of nuclear reactors, wherein the container or conduit is acted upon by a pressure medium, in particular water, during the examination and ultrasonic pulses propagated through the component or conduit from any deformation, the growth of cracks or leakages are picked up by means of measuring probes, in particular piezoelectric transducers arranged in such manner that the particular sound emission source can be determined on the basis of transit time differences, where the fault signals picked up by the measuring probes are electronically amplified and then fed to recording devices, characterised in that measuring probes and/or associated electronic amplifiers are used which are tuned to the reception of that frequency band of the sound emission spectrum located above a limit frequency $f_G$ but are damped or non-resonant for frequency band $< f_G$, where the limit frequency $f_G$ is defined by the equation:

$$5,9 \leq \frac{f_G \cdot d}{MHz \cdot mm} \leq 6,0$$

and d is the wall thickness of the component or conduit which is to be examined.

2. A method as claimed in Claim 1, characterised in that wide-band measuring probes are used together with subsequently connected preamplifiers active as high-pass-filters from the limit frequency $f_G$.

3. A method as claimed in Claim 1 or 2, characterised in that the measuring probes are themselves resonant above the limit frequency $f_G$ but are damped or non-resonant below $f_G$.

## Revendications

1. Procédé de contrôle par émission acoustique (SEP) de réservoirs ou de conduites tubulaires en acier, notamment pour le contrôle des éléments du circuit primaire de réacteurs nucléaires, selon lequel le réservoir ou la conduite tubulaire est chargé sur une face par un milieu de pression, notamment de l'eau, lors de la mise en œuvre du contrôle, et sur l'autre face les impulsions ultrasonores, qui sont émises lors de phénomènes de déformation, d'une croissance de fissures ou dans le cas de fuites et se propagent à travers les éléments ou la conduite tubulaire, sont enregistrées au moyen de sondes de mesure, notamment de transducteurs piézoélectriques, qui sont disposés de telle sorte que la source respective d'émission acoustique peut être déterminée sur la base des différences des temps de transit, les signaux de défaut captés par les sondes de mesure étant amplifiés électroniquement et envoyés ensuite à des appareils d'enregistrement, caractérisé par le fait que l'on utilise des sondes de mesure et/ou des amplificateurs électroniques associés, qui sont accordés pour la réception de la bande de fréquences du spectre d'émission acoustique, située au-dessus d'une fréquence limite $f_G$, et présentent au contraire une résonance limitée ou ne sont pas résonnants pour des bandes de fréquences inférieure à $f_G$, la fréquence limite $f_G$ étant définie par la relation:

$$5{,}9 \leq \frac{f_G \cdot d}{MHz \cdot mm} \leq 6{,}0$$

et d désignant l'épaisseur de la paroi du composant ou de la conduite tubulaire à contrôler.

2. Procédé suivant la revendication 1, caractérisé par le fait que l'on utilise des sondes de mesure à large bande en association avec des préamplificateurs branchés en aval et comportant un filtrage passe-haut au voisinage de la fréquence limite $f_G$.

3. Procédé suivant la revendication 1 ou 2, caractérisé par le fait que les sondes de mesure elles-mêmes sont résonnantes au-dessus de la fréquence limite $f_G$ et présentent au contraire une résonance limitée ou ne sont pas résonnantes au-dessous de $f_G$.

FIG 1

$$5,9 \leqq \frac{f_G \cdot d}{MHz \cdot mm} \leqq 6,0$$

FIG 2